# EUROPÄISCHE PATENTSCHRIFT

(11) **EP 1 252 787 B1**
(45) Veröffentlichungstag und Bekanntmachung des Hinweises auf die Patenterteilung: **11.05.2005**
(21) Anmeldenummer: 00991121.5
(22) Anmeldetag: 23.12.2000
(51) Int. Cl.: H04Q 7/38, H04Q 7/22

(54) **VERFAHREN ZUM BETREIBEN EINES MOBILFUNKNETZES**
METHOD FOR OPERATING A MOBILE RADIOTELEPHONE NETWORK
PROCEDE POUR FAIRE FONCTIONNER UN RESEAU DE TELEPHONIE MOBILE

(30) Priorität: 17.01.2000 DE 10001608
(43) Veröffentlichungstag der Anmeldung: 30.10.2002
(73) Patentinhaber: ROBERT BOSCH GMBH, 70442 Stuttgart (DE)
(72) Erfinder: HANS, Martin, 31141 Hildesheim (DE); BECKMANN, Mark, 31789 Hameln (DE)
(86) Internationale Anmeldenummer: PCT/DE2000/004652
(87) Internationale Veröffentlichungsnummer: WO 2001/058196

(56) Entgegenhaltungen:
- EP-A- 0 898 438
- WO-A-99/51051
- "Universal Mobile Telecommunications System (UMTS); MAC protocol specification (3G TS 25.323 version 3.0.0 Release 1999)" ETSI , 2. Januar 2000 (2000-01-02), Seiten 1-16, XP002168224 Sophia Antipolis, France

## Beschreibung

### Stand der Technik

Die Erfindung geht von einem Verfahren zum Betreiben eines Mobilfunknetzes nach der Gattung des Hauptanspruchs aus.

Aus der noch nicht vorveröffentlichten deutschen Patentanmeldung mit dem Aktenzeichen 19956062.5 ist bereits ein Verfahren zum Betreiben eines Mobilfunknetzes bekannt, in dem Nutzdaten zwischen einer Mobilstation und einer ersten Basisstation übertragen werden, wobei die Nutzdaten vor ihrer Übertragung zu Paketdateneinheiten, zusammengesetzt werden, wobei für die Übertragung der Paketdateneinheiten sowohl in der Mobilstation als auch in einer der ersten Basisstation übergeordneten ersten Netzwerkeinheit übertragungsspezifische Informationen, die einen aktuellen Zustand der Übertragung beschreiben, abgelegt werden, und wobei bei einem Verbindungswechsel der Mobilstation von der ersten Basisstation zu einer zweiten Basisstation mit einer zweiten übergeordneten Netzwerkeinheit die in der ersten übergeordneten Netzwerkeinheit abgelegten übertragungsspezifischen Informationen an die zweite übergeordnete Netzwerkeinheit übertragen werden, um die Übertragung nach dem Verbindungswechsel im wesentlichen direkt von ihrem aktuellen Zustand aus fortzusetzen.

Aus der Druckschrift "Universal Mobile Telecommunications System (UMTS); MAC protocol specification (3G TS 25.323 version 3.0.0 Release 1999), ETSI" ist bekannt, bei einem Verbindungswechsel von einer Verbindung zwischen einem Endgerät und einer ersten SRNC verbindungsspezifische Daten wie die Nummer des als nächsten erwarteten Datenpaketes zwischen der ersten SRNC und der zweiten SRNC auszutauschen. Die zweite SNRC sendet an das Endgerät die Nummer des als nächsten vom Endgerät erwarteten Datenpaketes.

### Vorteile der Erfindung

Das erfindungsgemäße Verfahren mit den Merkmalen des Hauptanspruchs hat demgegenüber den Vorteil, daß vor dem Verbindungswechsel die Übertragung der Paketdateneinheiten von der ersten Basisstation zur Mobilstation von der ersten übergeordneten Netzwerkeinheit angehalten wird, daß mit den übertragungsspezifischen Informationen von der ersten übergeordneten Netzwerkeinheit ein erster Identifikator der als nächstes von der Mobilstation in der ersten übergeordneten Netzwerkeinheit erwarteten Paketdateneinheit an die zweite übergeordnete Netzwerkeinheit übertragen wird und daß von der zweiten übergeordneten Netzwerkeinheit eine erste Verbindungswechselpaketdateneinheit an die Mobilstation übertragen wird, die den ersten Identifikator umfaßt. Auf diese Weise wird sichergestellt, daß während des Verbindungswechsels keine Paketdateneinheiten an die Mobilstation übertragen werden, um eine fehlerhafte Detektion solcher Paketdateneinheiten aufgrund einer eventuellen Rekonfigurierung oder Zurücksetzung der Mobilstation zu verhindern. weiterhin wird durch die erste Verbindungswechselpaketdateneinheit sichergestellt, daß die Mobilstation nach dem Verbindungswechsel die Versendung mit der von der zweiten übergeordneten Netzwerkeinheit erwarteten Paketdateneinheit fortsetzt, so daß keine während des Verbindungswechsels von der Mobilstation an die erste oder die zweite übergeordnete Netzwerkeinheit versendete Paketdateneinheiten beispielsweise aufgrund eines fehlerhaften Empfangs oder einer fehlerhaften Auswertung verlorengehen. Vielmehr wird ein lückenloser und durch die beim Verbindungswechsel eventuell durchzuführenden Rekonfigurations- oder Rücksetzvorgänge nicht beeinträchtigter Empfang der von der Mobilstation versendeten Paketdateneinheiten in der zweiten übergeordneten Netzwerkeinheit gewährleistet.

Ein weiterer Vorteil besteht darin, daß der erste Identifikator durch Verwendung einer als Verbindungswechselpaketdateneinheit ausgebildeten Paketdateneinheit versendet wird, so daß er effizient über die bestehenden Datenkanäle ohne zusätzliche Signallisierung und ohne den Auf- und Abbau von neuen Datenkanälen oder die Rekonfiguration bestehender Datenkanäle zur Mobilstation übertragen werden kann.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft ist es, daß von der Mobilstation die Versendung von Paketdateneinheiten nach Empfang des ersten Identifikators angehalten wird. Auf diese Weise wird die Mobilstation über den Verbindungswechsel in Kenntnis gesetzt und daran gehindert, weitere Paketdateneinheiten zu versenden, die von der zweiten übergeordneten Netzwerkeinheit möglicherweise noch gar nicht erwartet werden.

Vorteilhaft ist auch, daß von der Mobilstation nach Empfang des ersten Identifikators eine zweite Verbindungswechselpaketdateneinheit an die zweite übergeordnete Netzwerkeinheit übertragen wird, die einen zweiten Identifikator der als nächstes von der zweiten übergeordneten Netzwerkeinheit in der Mobilstation erwarteten Paketdateneinheit umfaßt. Auf diese Weise wird sichergestellt, daß zum frühest möglichen Zeitpunkt nach dem Verbindungswechsel die Versendung von Paketdateneinheiten durch die zweite übergeordnete Netzwerkeinheit wieder aufgenommen werden kann, nämlich dann, wenn die Mobilstation mittels des zweiten Identifikators mitgeteilt hat, daß sie zum Empfang dieser Paketdateneinheiten bereit ist.

Ein weiterer Vorteil besteht darin, daß die zweite Verbindungswechselpaketdateneinheit von der Mobilstation nach Rekonfiguration oder Zurücksetzen der Mobilstation an die zweite übergeordnete Netzwerkeinheit übertragen wird.

Durch das Rekonfigurieren oder Zurücksetzen der Mobilstation nach Empfang des ersten Identifikators ist sichergestellt, daß alle Paketdateneinheiten, die noch von der ersten übergeordneten Netzwerkeinheit gesendet wurden, mit der nicht rekonfigurierten oder zurückgesetzten Mobilstation empfangen werden und daß alle Paketdateneinheiten, die von der zweiten übergeordneten Netzwerkeinheit empfangen werden, mit der rekonfigurierten oder zurückgesetzten Mobilstation detektiert werden.

Ein weiterer Vorteil besteht darin, daß von der zweiten übergeordneten Netzwerkeinheit Paketdateneinheiten ignoriert werden, die nach dem Verbindungswechsel und vor dem Empfang der zweiten Verbindungswechselpaketdateneinheit von der Mobilstation empfangen werden. Auf diese Weise wird verhindert, daß Paketdateneinheiten, die die Mobilstation noch vor dem Verbindungswechsel versendet hatte, die aber erst nach dem verbindungswechsel in der zweiten übergeordneten Netzwerkeinheit empfangen wurden, zu einer fehlerhaften Detektion in der zweiten übergeordneten Netzwereinheit führen, weil beispielsweise eine Rekonfiguration oder ein Zurücksetzen der zweiten übergeordneten Netzwerkeinheit durch den Verbindungswechsel veranlaßt wurde. Somit wird ein durch die beim Verbindungswechsel eventuell durchzuführenden Rekonfigurations- oder Rücksetzvorgänge nicht beeinträchtigter Empfang der von der Mobilstation versendeten Paketdateneinheiten in der zweiten übergeordneten Netzwerkeinheit gewährleistet.

Ein weiterer Vorteil ergibt sich dadurch, daß das Versenden von Paketdateneinheiten von der Mobilstation nach Rekonfiguration oder Zurücksetzen der Mobilstation mit der durch den ersten Indikator referenzierten Paketdateneinheit fortgesetzt wird, wobei diese und die folgenden Paketdateneinheiten an die zweite übergeordnete Netzwerkeinheit übertragen werden. Auf diese Weise wird sichergestellt, daß die Mobilstation die Fortsetzung der Datenübertragung nach dem Verbindungswechsel mit an die neue Verbindung zur zweiten übergeordneten Netzwerkeinheit angepaßten Paketdateneinheiten durchführt, so daß diese Paketdateneinheiten in der zweiten übergeordneten Netzwerkeinheit auch detektiert werden können.

Ein weiterer Vorteil ergibt sich dadurch, daß die zweite übergeordnete Netzwerkeinheit vor Empfang der übertragungsspezifischen Informationen initialisiert wird. Auf diese Weise wird verhindert, daß die übertragungsspezifischen Informationen von der zweiten übergeordneten Netzwerkeinheit aufgrund mangelnder Initialisierung nicht verstanden werden.

Vorteilhaft ist auch, daß der erste Identifikator in der ersten Verbindungswechselpaketdateneinheit und/oder der zweite Identifikator in der zweiten Verbindungswechselpaketdateneinheit jeweils als Folgenummer der als nächsten erwarteten Paketdateneinheit übertragen wird. Auf diese Weise wird nur unwesentlich Bandbreite für die Übertragung der einzelnen Verbindungswechselpaketdateneinheiten beansprucht, insbesondere dann, wenn die Folgenummer lediglich 8 Bit beansprucht.

### Zeichnung

Ein Ausführungsbeispiel der Erfindung ist in der Zeichnung dargestellt und in der nachfolgenden Beschreibung näher erläutert. Es zeigen Figur 1 ein Blockschaltbild eines Mobilfunknetzes, Figur 2 ein Blockschaltbild für eine Verbindung zwischen einer Mobilstation und einer ersten übergeordneten Netzwerkeinheit über eine erste Basisstation vor einem Verbindungswechsel, Figur 3 ein Blockschaltbild für eine Verbindung zwischen der Mobilstation und einer zweiten übergeordneten Netzwerkeinheit über eine zweite Basisstation nach einem Verbindungswechsel, Figur 4 ein Beispiel für einen Zeitablauf des Verbindungswechsels nach dem Stand der Technik und Figur 5 ein Beispiel für einen Zeitablauf des Verbindungswechsels nach der Erfindung.

### Beschreibung des Ausführungsbeispiels

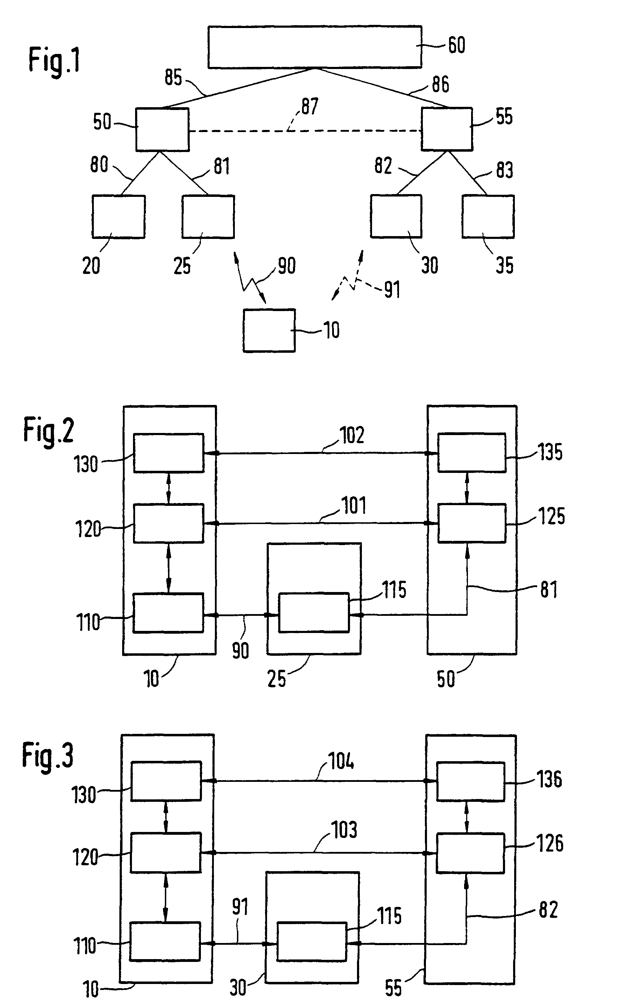

Die Erfindung behandelt ein Verfahren zum Betreiben eines Mobilfunknetzes 1 gemäß Figur 1, bei dem während einer aufgebauten Verbindung ein Verbindungswechsel zwischen zwei Basisstationen 25, 30 erfolgt, der auch als "relocation" bezeichnet wird. Das Mobilfunknetz 1 kann dabei beispielsweise nach dem GSM-Standard (Global System for Mobile Communications) oder nach dem UMTS-Standard (Universal Mobile Telecommunications System) aufgebaut sein. Das Verfahren bezieht sich dabei speziell auf das Versenden von übertragungsspezifischen Informationen der aufgebauten Verbindung, beispielsweise in Form von internen Protokollinformationen einer Konvergenzprotokollschicht 130, 135, zwischen zwei übergeordneten Netzwerkeinheiten 50, 55 des zellular ausgebildeten Mobilfunknetzes 1.

Das zellulare Mobilfunknetz 1 besteht aus verschiedenen Einheiten 10, 20, 25, 30, 35, 50, 55, 60, die physikalisch miteinander verbunden sind. Dabei kennzeichnet 10 eine Mobilstation des Mobilfunknetzes 1, die beispielsweise als mobiles Telekommunikationsendgerät ausgebildet sein kann. Das mobile Telekommunikationsendgerät 10 ist über eine erste Luftschnittstelle 90 mit einer ersten Basisstation 25 des Mobilfunknetzes 1 verbunden. Die erste Basisstation 25 ist über eine erste Festnetzverbindung 81 mit einer ersten übergeordneten Netzwerkeinheit 50 verbunden. Eine zweite Basisstation 30 ist über eine zweite Festnetzverbindung 82 mit einer zweiten übergeordneten Netzwerkeinheit 55 verbunden. Eine dritte Basisstation 20 ist über eine dritte Festnetzverbindung 80 mit der ersten übergeordneten Netzwerkeinheit 50 verbunden. Eine vierte Basisstation 35 ist über eine vierte Festnetzverbindung 83 mit der zweiten übergeordneten Netzwerkeinheit 55 verbunden. Die erste übergeordnete Netzwerkeinheit 50 ist über eine fünfte Festnetzverbindung 85 mit einer höchsten Netzwerkeinheit 60 verbunden. Die zweite übergeordnete Netzwerkeinheit 55 ist über eine sechste Festnetzverbindung 86 mit der höchsten Netzwerkeinheit 60 verbunden. Optional kann die erste übergeordnete Netzwerkeinheit 50 über eine siebte Festnetzverbindung mit der zweiten übergeordneten Netzwerkeinheit 55 verbunden sein, wie in Figur 1 gestrichelt dargestellt ist. Die erste übergeordnete Netzwerkeinheit 50, die zweite übergeordnete Netzwerkeinheit 55 und gegebenenfalls weitere übergeordnete Netzwerkeinheiten bilden gemäß dem UMTS-Standard sogenannte "Radio Network Subsystems" (RNS). Die höchste Netzwerkeinheit bildet gemäß dem UMTS-Standard einen sogenannten "GPRS Support Node" (General Packet Radio System Support Node) (GSN).

Im zellularen Mobilfunknetz 1 werden zur Datenübertragung zwischen dem mobilen Telekommunikationsendgerät 10 und den übrigen an der aufgebauten Verbindung beteiligten Einheiten des Mobilfunknetzes 1 logische Verbindungen hergestellt. Dabei existieren verschiedene Arten von logischen Verbindungen zwischen dem mobilen Telekommunikationsendgerät 10 und den verschiedenen beteiligten Einheiten des Mobilfunknetzes 1 gleichzeitig. Diese logischen Verbindungen entstammen einem hierarchischen Modell in dem jede hierarchische Schicht einem Protokoll entspricht, das sowohl im mobilen Telekommunikationsendgerät 10 als auch in der entspechenden Einheit des Mobilfunknetzes 1 vorhanden ist und das die entsprechende logische Verbindung realisiert.

Gemäß Figur 2 sind beispielhaft die logischen Verbindungen zwischen der Mobilstation 10 und der ersten übergeordneten Netzwerkeinheit 50 sowie zwischen der Mobilstation 10 und der ersten Basisstation 25 dargestellt. Die unterste hierarchische Schicht in diesem hierarchischen Modell ist durch eine erste physikalische Schicht 110 im mobilen Telekommunikationsendgerät 10 und eine zweite physikalische Schicht 115 in der ersten Basisstation 25 gebildet, die eine der ersten Luftschnittstelle 90 entsprechenden physikalische Verbindung zwischen dem mobilen Telekommunikationsendgerät 10 und der ersten Basisstation 25 des Mobilfunknetzes 1 realisieren. Darüber liegt eine Datensicherungsschicht, die gemäß dem UMTS-Standard auch als "Data Link Layer" bezeichnet wird, und die in mehrere Unterschichten aufgeteilt ist und verschiedene logische Verbindungen zwischen dem mobilen Telekommunikationsendgerät 10 und der gemäß dem UMTS-Standard als "Radio Network Controler" (RNC) bezeichneten ersten übergeordneten Netzwerkeinheit 50 realisiert. Eine solche Unterschicht ist gemäß dem UMTS-Standard die Funkverbindungsteuerungsschicht, die auch als "Radio Link Control"-Schicht (RLC) bezeichnet wird und in der ein erstes RLC-Protokoll 120 im mobilen Telekommunikationsendgerät 10 und ein zweites RLC-Protokoll 125 in der ersten übergeordneten Netzwerkeinheit 50 eine erste logische RLC-Verbindung 101 als eine der genannten logischen Verbindungen realisieren. Eine andere Unterschicht ist die Paketdaten-Konvergenzprotokollschicht, die gemäß dem UMTS-Standard auch als "Paket Data Convergence Protocol"-Schicht (PDCP) bezeichnet wird und in der ein erstes PDCP-Protokoll 130 im mobilen Telekommunikationsendgerät 10 und ein zweites PDCP-Protokoll 135 in der ersten übergeordneten Netzwerkeinheit 55 eine erste logische PDCP-Verbindung 102 realisieren. In den höheren hierarchischen Schichten, wie beispielsweise der Netzwerk- und Transportschicht, können weitere Protokolle, wie beispielsweise das Funkressourcensteuerungsprotokoll RRC (Radio Resource Control), das Internet-Protokoll IP, das Übertragungssteuerungsprotokoll TCP (Transit Control Protocol) und dergleichen weitere logische Verbindungen aufbauen. Gemäß Figur 2 sind im hierarchischen Modell benachbarte Schichten miteinander verbunden, wobei übergeordnete Schichten die Dienste der entsprechend benachbarten untergeordneten Schichten in Anspruch nehmen. Die zweite physikalische schicht 115 ist wie in Figur 1 angedeutet über die erste Festnetzverbindung mit der ersten übergeordneten Netzwerkeinheit 50 und dort mit dem zweiten RLC-Protokoll 125 verbunden.

Aus der Veröffentlichung "Technical Specification 25.301, UMTS Radio Interface Protocol Architecture" ist die entsprechende UMTS Protokoll Architektur der sogenannten Schichten 2 und 3 bekannt, zu denen auch die Paketdaten-Konvergenzprotokollschicht gehört. Insbesondere ist die Paketdaten-Konvergenzprotokollschicht und ihre Lage innerhalb dieser Architektur bekannt. Das PDCP-Protokoll 130, 135 ist aus der Veröffentlichung "Technical Specification 25.323, Packet Data Convergence Protocol", soweit es bisher spezifiziert ist, bekannt.

Eine Aufgabe des PDCP-Protokolls 130, 135 ist die Komprimierung von Paketdaten-Kontrollinformationen, die von den Protokollen der oberhalb der Paketdaten-Konvergenzprotokollschicht liegenden Transport- und Netzwerkschicht den ebenfalls in der Paketdatenprotokollschicht vor ihrer Übertragung zu Dateneinheiten oder Paketdateneinheiten zusammengestezten Nutzdaten einer ebenfalls oberhalb der Paketdaten-Konvergenzprotokollschicht ablaufenden Anwendung hinzugefügt wurden und die vor der Übertragung über die erste Luftschnittstelle 90 komprimiert werden müssen, um eine effiziente Übertragung zu ermöglichen.

Das zellulare Mobilfunknetz bietet die Möglichkeit der Datenübertragung vom mobilen Telekommunikationsendgerät 10 zu einer Einheit des Mobilfunknetzes 1 auch dann, wenn der Nutzer des mobilen Telekommunikationsendgerätes 10 die von der ersten Basisstation 25 aufgespannte Funkzelle verläßt. Dazu wird zwischen dem mobilen Telekommunikationsendgerät 10 und dem Mobilfunknetz 1 ein Verfahren zur Übergabe der aufgebauten Verbindung für die Datenübertragung von der ersten Basisstation 25 zur zweiten Basisstation 30 durchgeführt, vorausgesetzt, der Nutzer des mobilen Telekommunikationsendgerätes 10 bewegt sich in die von der zweiten Basisstation 30 aufgespannte Funkzelle. Dieser Verbindungswechsel wird wie beschrieben auch als "handover" zwischen den Basisstationen bezeichnet.

Bei einem Verbindungswechsel kann es nun sein, daß die zweite Basisstation 30, zu der die Verbindung übergeben werden soll, mit einer anderen übergeordneten Netzwerkeinheit verbunden ist als die bisherige erste Basisstation 25. Dies ist beim beschriebenen Ausführungsbeispiel der Fall, wonach die zweite Basisstation 30 im Unterschied zur ersten Basisstation 25 mit der zweiten übergeordneten Netzwerkeinheit 55 verbunden ist. Es erfolgt daher gleichzeitig mit oder nach der Verbindungsübergabe von einer ersten Basisstation zu einer zweiten auch die Verbindungsübergabe zwischen der ersten übergeordneten Netzwerkeinheit 50 und der zweiten übergeordneten Netzwerkeinheit 55. Diese Verbindungsübergabe wird "relocation" zwischen den Netzwerkeinheiten genannt.

Jedes Protokoll existiert immer mindestens zweimal auf der gleichen Protokollschichtebene in verschiedenen Netzwerkeinheiten, wie auch in Figur 2 das RLC-Protokoll und das PDCP-Protokoll sowohl im mobilen Telekommunikationsendgerät 10 als auch in der ersten übergeordneten Netzwerkeinheit 50 existiert. Speziell die PDCP-Protokolle 130, 135 liegen gemäß dem UMTS-Standard wie beschrieben zum einen im mobilen Telekommunikationsendgerät 10 und zum anderen in der ersten übergeordneten Netzwerkeinheit 50 sowie in weiteren übergeordneten Netzwerkeinheiten, die als RNC ausgebildet sind. Im Falle des beschriebenen Verbindungswechsels wird die bestehende Datenverbindung zwischen dem mobilen Telekommunikationsendgerät 10 und dem Mobilfunknetz 1 so verlegt, daß sie über die zweite Basisstation 30 und die zweite übergeordnete Netzwerkeinheit 55 verläuft. Damit sendet das erste PDCP-Protokoll 130 im mobilen Telekommunikationsendgerät 10 vor dem Verbindungswechsel an das zweite PDCP-Protokoll 135 in der ersten übergeordneten Netzwerkeinheit 55 über die erste logische PDCP-Verbindung 102 und nach dem Verbindungswechsel an ein drittes PDCP-Protokoll 136 der zweiten übergeordneten Netzwerkeinheit 55 gemäß Figur 3.

Die Erfindung geht nun von dem konkreten und beispielhaften Szenario aus, daß das mobile Telekommunikationsendgerät 10 mit Einheiten des Mobilfunknetzes 1, wie der ersten Basisstation 25, der ersten übergeordneten Netzwerkeinheit 50 und der höchsten Netzwerkeinheit 60 über die nötigen physikalischen und logischen Verbindungen, insbesondere der vom ersten PDCP-Protokoll 130 und vom zweiten PDCP-Protokoll 135 realisierten ersten logischen PDCP-Verbindung 102 zwischen dem mobilen Telekommunikationsendgerät 10 und der ersten übergeordneten Netzwerkeinheit 50, verbunden ist und ein Datentransfer, also ein Austausch von Paketdateneinheiten über diese Verbindungen stattfindet.

Dabei legen das erste PDCP-Protokoll 130 und das zweite PDCP-Protokoll 135 aufgrund ihrer Funtionalität übertragungsspezifische Informationen ab, die zur Komprimierung und Manipulation der Nutzdaten und der Paketdaten-Kontrollinformationen benötigt werden. Um eine korrekte Funtion der genannten beiden PDCP-Protokolle 130, 135 zu ermöglichen, muß ein Teil dieser übertragungsspezifischen Informationen in den beiden PDCP-Protokollen 130, 135 synchronisiert oder sogar gleich sein. Wechselt das mobile Telekommunikationsendgerät 10 nun die Funkzelle im Mobilfunknetz 1, beispielsweise aufgrund einer Bewegung des mobilen Telekommunikationsendgerätes 10 aus dem Sendebereich der ersten Basisstation 25, in eine neue Funkzelle, so wird ein Verbindungswechsel durchgeführt und eine neue physikalische Verbindung zwischen dem mobilen Telekommunikationsendgerät 10 und der zweiten Basisstation 30 aufgebaut, die die neue Funkzelle aufspannt. Die neue physikalische Verbindung entspricht dabei einer zweiten Luftschnittstelle 91 gemäß Figur 1 und Figur 3. In Figur 3 ist die Verbindung des mobilen Telekommunikationsendgerätes 10 mit der zweiten übergeordneten Netzwerkeinheit 55 über die zweite Basisstation 30 dargestellt, wobei gleiche Bezugszeichen gleiche Elemente kennzeichnen wie in Figur 2. Dabei ist die zweite Basisstation 30 gemäß Figur 3 über die zweite Festnetzverbindung 82 mit der zweiten übergeordneten Netzwerkeinheit 55 beziehungsweise deren RLC-Protokoll verbunden, das hier als drittes RLC-Protokoll 126 gekennzeichnet ist. Die zweite übergeordnete Netzwerkeinheit 55 ist wie die erste übergeordnete Netzwerkeinheit 50 aufgebaut und weist in entsprechender Weise neben dem dritten RLC-Protokoll 126 das dritte PDCP-Protokoll 136 auf. Die zweite Basisstation 30 ist im Mobilfunknetz 1 wie beschrieben mit der von der ersten übergeordneten Netzwerkeinheit 50 verschiedenen zweiten übergeordneten Netzwerkeinheit 55 verbunden. Somit werden auch die logischen Verbindungen zwischen dem mobilen Telekommunikationsendgerät 10 und der zweiten übergeordneten Netzwerkeinheit 55 neu aufgebaut. Dabei wird zwischen dem ersten RLC-Protokoll 120 und dem dritten RLC-Protokoll 126 eine zweite logische RLC-Verbindung 103 aufgebaut. Zwischen dem ersten PDCP-Protokoll 130 und dem dritten PDCP-Protokoll 136 wird eine zweite logische PDCP-Verbindung 104 aufgebaut. Somit wird die erste logische PDCP-Verbindung 103 durch die zweite logische PDCP-Verbindung 104 ersetzt. Dazu muß in der zweiten übergeordneten Netzwerkeinheit 55 das dritte PDCP-Protokoll 136 nach dem Verbindungswechsel erst einmal neu erzeugt werden.

Um nun einen korrekten Datenfluß über die zweite logische PDCP-Verbindung 104 zu ermöglichen, müssen zunächst das erste PDCP-Protokoll 130 im mobilen Telekommunikationsendgerät 10 und das dritte PDCP-Protokoll 136 in der zweiten übergeordneten Netzwerkeinheit 55 wieder synchronisiert werden. Eine Methode hierzu ist das Zurücksetzen des ersten PDCP-Protokolls 130 im mobilen Telekommunikationsendgerät 10 in einen definierten Ausgangszustand, der dem Ausgangszustand des bei dem Verbindungswechsel neu erzeugten dritten PDCP-Protokolls 136 entspricht, wobei das erste PDCP-Protokoll 130 und das dritte PDCP-Protokoll 136 dann die gleichen übertragungsspezifischen Informationen enthalten.

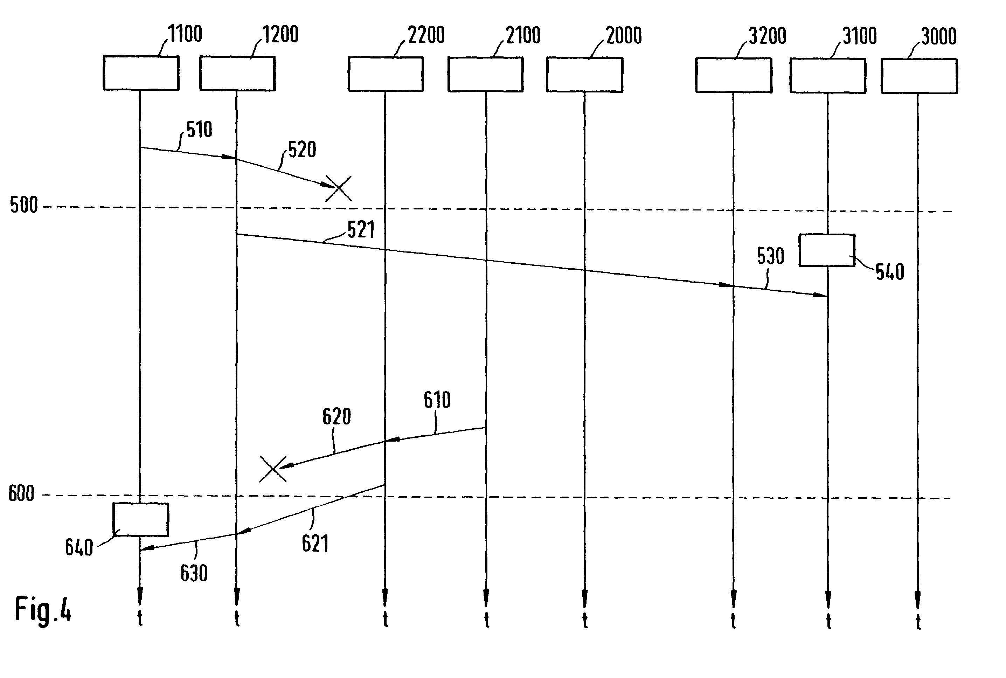

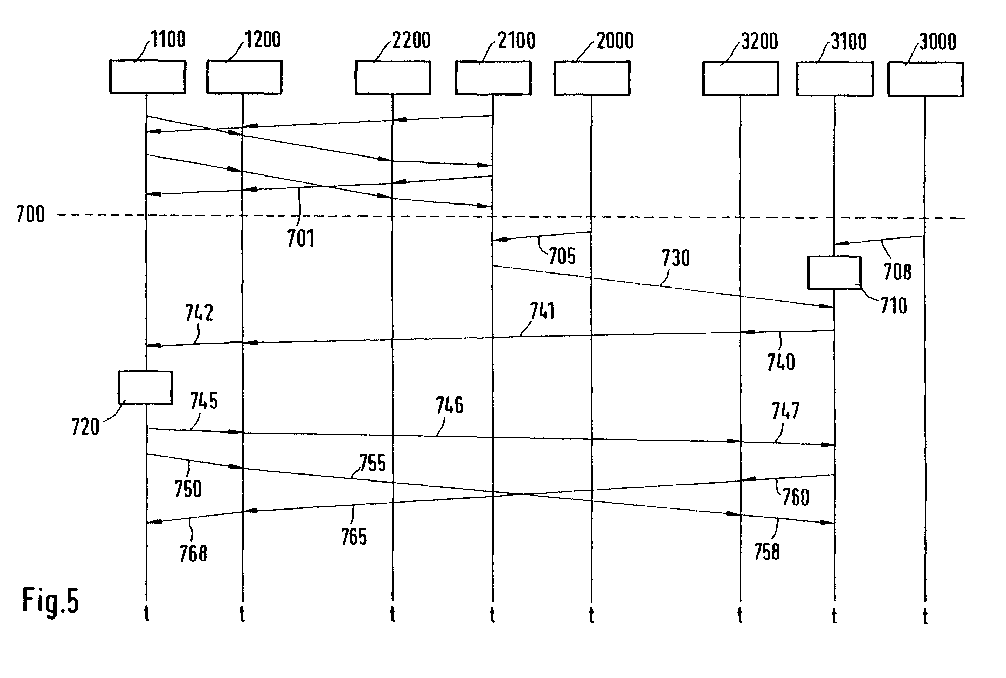

Wird im Verlauf einer bestehenden Mobilfunkverbindung zwischen der Mobilstation 10 und dem Mobilfunknetz 1 die übergeordnete Netzwerkeinheit, über die die Mobilfunkverbindung läuft, gewechselt, dann werden in der ursprünglichen, ersten übergeordneten Netzwerkeinheit 50 die für die Erzeugung des zweiten RLC-Protokolls 125 vorgesehene zweite RLC-Protokolleinheit 2200 und die für die Erzeugung des zweiten PDCP-Protokolls 135 vorgesehene zweite PDCP-Protokolleinheit 2100 gelöscht und in der neuen, zweiten übergeordneten Netzwerkeinheit 55 wird eine dritte RLC-Protokolleinheit 3200 und eine dritte PDCP-Protokolleinheit 3100 aufgebaut und so konfiguriert, daß anschließend eine Datenübertragung zwischen der dritten RLC-Protokolleinheit 3200 und der für die Erzeugung des ersten RLC-Protokolls 120 vorgesehenen ersten RLC-Protokolleinheit 1200 bzw. zwischen der dritten PDCP-Protokolleinheit 3100 und der für die Erzeugung des ersten PDCP-Protokolls 130 vorgesehenen ersten PDCP-Protokolleinheit 1100, also zwischen dem dritten RLC-Protokoll 126 und dem ersten RLC-Protokoll 120 bzw. zwischen dem dritten PDCP-Protokoll 136 und dem ersten PDCP-Protokoll 130 gemäß den Figuren 4 und 5 möglich ist. Um bei einem solchen als "relocation" bezeichneten Verbindungswechsel eine verlustlose Datenübertragung durch die PDCP-Protokolleinheiten 1100, 2100, 3100 garantieren zu können, müssen sie aus Gründen, die mit der Komprimierung der Daten zusammenhängen, die von höheren Protokollschichten erhaltenen Paketdateneinheiten speichern und numerieren. Die Paketdateneinheiten werden erst dann aus dem dafür vorgesehenen und in den Figuren nicht dargestellten Speicher gelöscht, wenn ihre fehlerfreie Übertragung von der jeweils empfangenden RLC-Protokolleinheit quittiert wurde. Das derzeit aus der Veröffentlichung "Packet Data Convergence (PDCP) Protokoll", 3GPP, Technical Specification 25.323 bekannte Verfahren wird dabei im folgenden beschrieben:

Während der Datenübertragung wird durch die entsprechende PDCP-Protokolleinheit 1100, 2100, 3100 des jeweiligen Senders jede von einer höheren Protokollschicht zur Datenübertragung erhaltene Paketdateneinheit mittels einer sogenannten PDCP-Sendefolgennummer numeriert und gespeichert. Danach wird die Paketdateneinheit ggfs. komprimiert und an die RLC-Protokollschicht zur Übertragung übergeben. In der entsprechenden PDCP-Protokolleinheit 1100, 2100, 3100 des jeweiligen Empfängers wird jede von der dortigen RLC-Protokollschicht empfangene Paketdateneinheit ebenfalls unter Vergabe einer PDCP-Empfangsfolgenummer gezählt. Da die RLC-Protokollschicht eine verlustlose Übertragung der Paketdateneinheiten in der richtigen Reihenfolge garantiert, entsprechen sich die PDCP-Sendefolgennummer und die PDCP-Empfangsfolgenummer eines jeden übertragenen Datenpaketes. Da die Mobilstation 10 und die jeweilige übergeordnete Netzwerkeinheit 50, 55 jeweils sowohl als Sender als auch als Empfänger fungieren können, umfassen sie in der Regel PDCP-Protokolleinheiten 1100, 2100, 3100 sowohl zum Senden als auch zum Empfangen von Paketdateneinheiten. Es gibt daher PDCP-Sendefolgennummern und PDCP-Empfangsfolgenummern sowohl im Uplink, d.h. in der Übertragungstrecke von der Mobilstation 10 zur entsprechenden übergeordneten Netzwerkeinheit 50, 55 als auch im Downlink, d.h. in der Übertragungstrecke von der entsprechenden übergeordneten Netzwerkeinheit 50, 55 zur Mobilstation 10. Die Mobilstation 10 zählt also die gesendeten Paketdateneinheiten mit der sogenannten PDCP-Uplink-Sendefolgennummer und die empfangenen Paketdateneinheiten mit der PDCP-Downlink-Empfangsfolgennummer. Die entsprechende übergeordnete Netzwerkeinheit 50, 55 zählt dann die gesendeten Paketdateneinheiten mit der sogenannten PDCP-Downlink-Sendefolgennummer und die empfangenen Paketdateneinheiten mit der PDCP-Uplink-Empfangsfolgennummer.

Kommt es nun zu einem Verbindungswechsel, so überträgt die erste übergeordnete Netzwerkeinheit 50 zur zweiten, neuen übergeordneten Netzwerkeinheit 55 die folgenden übertragungsspezifischen Informationen:
1) die PDCP-Uplink-Empfangsfolgennummer des nächsten erwarteten und von der zweiten übergeordneten Netzwerkeinheit 55 zu empfangenden Datenpakets und
2) die noch in seinem Speicher gespeicherten Paketdateneinheiten und die PDCP-Downlink-Sendefolgennummer der gespeicherten Paketdateneinheit, die als nächstes zur Mobilstation 10 übertragen worden wäre, sowie die PDCP-Downlink-Sendefolgennummern aller zu diesem Zweck gespeicherten Paketdateneinheiten, wobei diese in der Reihenfolge, in der sie von den höheren Protokollschichten empfangen wurden, abgelegt sind.

Nun sendet die zweite übergeordnete Netzwerkeinheit 55 die PDCP-Uplink-Empfangsfolgennummer des nächsten erwarteten und von der zweiten übergeordneten Netzwerkeinheit 55 zu empfangenden Datenpakets an die Mobilstation 10. Die Mobilstation 10 wiederum sendet die PDCP-Downlink-Empfangsfolgennummer der nächsten von der Mobilstation 10 erwarteten und zu empfangenden Paketdateneinheit an die zweite übergeordnete Netzwerkeinheit 55. Auf diese Weise wissen die jeweiligen zum Senden zuständigen PDCP-Protokolleinheiten 1100, 2100, 3100 in der Mobilstation 10 und in der entsprechenden übergeordneten Netzwerkeinheit 50, 55, welche Paketdateneinheiten vor dem Verbindungswechsel von der jeweiligen zum Empfangen zuständigen PDCP-Protokolleinheit 1100, 2100, 3100 in der Mobilstation 10 und in der entsprechenden übergeordneten Netzwerkeinheit 50, 55 korrekt empfangen wurden und von welcher Paketdateneinheit an der Nutzdatentransfer nach dem Verbindungswechsel wieder aufgenommen werden muß.

Das oben beschriebene Verfahren ist wie angegeben aus der Veröffentlichung "Packet Data Convergence (PDCP) Protokoll", 3GPP, Technical Specification 25.323 bekannt. Nicht genauer beschrieben ist dabei die Art und Weise, wie sich die PDCP-Protokolleinheiten 1100, 2100, 3100 bzw. wie sich die Mobilstation 10 und die entsprechende übergeordnete Netzwerkeinheit 50, 55 verhalten, wenn ein Verbindungswechsel stattfindet und auf welche Weise der oben beschriebene Austausch der als nächstes erwarteten PDCP-Downlink-Empfangsfolgennummer bzw. PDCP-Uplink-Empfangsfolgennummer zwischen der Mobilstation 10 und der zweiten übergeordneten Netzwerkeinheit 55 erfolgt.

Denkbar ist hier die Übertragung dieser übertragungsspezifischen Informationen durch ein anderes als das PDCP-Protokoll 130, 135, 136, bspw. durch das Funkressourcensteuerungsprotokoll RRC, das auch die Nachricht über das Stattfinden eines Verbindungswechsels empfängt und verarbeitet, oder durch das PDCP-Protokoll 130, 135, 136 selbst. Auch die zur Übertragung der Paketdateneinheiten genutzten Übertragungskanäle sind nicht festgelegt.

Ebenfalls aus der Veröffentlichung "Packet Data Convergence (PDCP) Protokoll", 3GPP, Technical Specification 25.323 " sind Formate für die von der jeweiligen PDCP-Protokollschicht an die jeweilige untergeordnete RLC-Protokollschicht verschickten Paketdateneinheiten (PDCP-PDUs) bekannt. Bisher sind die "PDCP-No-Header-PDU" und die "PDCP-Data-PDU" in der genannten Veröffentlichung "Packet Data Convergence (PDCP) Protokoll" definiert.

Bei dem beschriebenen Verfahren kann es gemäß Figur 4 zu folgenden Problemen kommen:

### Problem 1:

Hat die PDCP-Protokolleinheit 1100 in der Mobilstation 10 vor einem ersten stattfindenden Verbindungswechsel 500 erste Paketdateneinheiten 510 an die RLC-Protokolleinheit 1200 in der Mobilstation 10 übergeben und versendet die RLC-Protokolleinheit 1200 der Mobilstation 10 diese Paketdateneinheiten dann beispielsweise aufgrund eines ersten Übertragungsfehlers 520 vor dem ersten Verbindungswechsel 500 an die RLC-Protokolleinheit 3200 der zweiten übergeordneten Netzwerkeinheit 55 erst nach dem ersten Verbindungswechsel 500 gemäß dem Übertragungsschritt 521 in Figur 4, so kann die RLC-Protokolleinheit 3200 der zweiten übergeordneten Netzwerkeinheit 55 erst nach dem ersten Verbindungswechsel 500 die empfangenen Paketdateneinheiten gemäß dem Übertragungsschritt 530 an die PDCP-Protokolleinheit 3100 der zweiten übergeordneten Netzwerkeinheit 55 übergeben. Diese so empfangenen Paketdateneinheiten können dann eventuell von der PDCP-Protokolleinheit 3100 der zweiten übergeordneten Netzwerkeinheit 55 nicht richtig behandelt, z.B. dekomprimiert werden, da sich während bzw. nach dem ersten Verbindungswechsel 500 die Art der Datenmanipulation in der PDCP-Protokolleinheit 3100 der zweiten übergeordneten Netzwerkeinheit 55 gegenüber der PDCP-Protokolleinheit 2100 der ersten übergeordneten Netzwerkeinheit 50 geändert haben kann durch einen ersten Rücksetzvorgang 540 der PDCP-Protokolleinheit 3100 der zweiten übergeordneten Netzwerkeinheit 55 direkt nach dem ersten Verbindungswechsel 500, wobei der erste Rücksetzvorgang 540 bspw. im Zurücksetzen der Kompressionsalgorithmen bei der Initialisierung der PDCP-Protokolleinheit 3100 der zweiten übergeordneten Netzwerkeinheit 55 bestehen kann.

### Problem 2:

Hat die PDCP-Protokolleinheit 2100 in der ersten übergeordneten Netzwerkeinheit 50 vor einem zweiten stattfindenden Verbindungswechsel 600 zweite Paketdateneinheiten 610 an die RLC-Protokolleinheit 2200 der ersten übergeordneten Netzwerkeinheit 50 übergeben und versendet die RLC-Protokolleinheit 1200 der ersten übergeordneten Netzwerkeinheit 50 diese Paketdateneinheiten dann beispielsweise aufgrund eines zweiten Übertragungsfehlers 620 vor dem zweiten Verbindungswechsel 600 an die RLC-Protokolleinheit 1200 der Mobilstation 10 erst nach dem zweiten Verbindungswechsel 600 gemäß dem Übertragungsschritt 621 in Figur 4, so kann die RLC-Protokolleinheit 1200 der Mobilstation 10 erst nach dem zweiten Verbindungswechsel 600 die empfangenen Paketdateneinheiten gemäß dem Übertragungsschritt 630 an die PDCP-Protokolleinheit 1100 der Mobilstation 10 übergeben. Diese so empfangenen Paketdateneinheiten können dann eventuell von der PDCP-Protokolleinheit 1100 der Mobilstation 10 nicht richtig behandelt, z.B. dekomprimiert werden, da sich nach dem zweiten Verbindungswechsel 600 die Art der Datenmanipulation in der PDCP-Protokolleinheit 1100 der Mobilstation 10 geändert haben kann durch einen zweiten Rücksetzvorgang 640 der PDCP-Protokolleinheit 1100 der Mobilstation 10 direkt nach dem zweiten Verbindungswechsel 600, wobei der zweite Rücksetzvorgang 640 bspw. im Zurücksetzen der Kompressionsalgorithmen in der PDCP-Protokolleinheit 1100 der Mobilstation 10 bestehen kann.

Zur Lösung der angesprochenen Probleme wird erfindungsgemäß folgendes vorgeschlagen:

Um einen Austausch der PDCP-Empfangsfolgennummern zwischen der Mobilstation 10 und der zweiten übergeordnete Netzwerkeinheit 55 überhaupt zu ermöglichen, wird zunächst ein neues Format für eine PDCP-Paketdateneinheit (PDCP-PDU) vorgeschlagen, die im wesentlichen eine PDCP-Folgennummer enthält und im folgenden als Verbindungswechselpaketdateneinheit oder als PDCP-Folgennummernpaketdateneinheit (PDCP-SNPDU) bezeichnet wird. Um die PDCP-SNPDU von den bereits definierten und im Stand der Technik beschriebenen Paketdateneinheiten beim Empfang unterscheiden zu können, enthält die hier vorgeschlagene PDCP-SNPDU auch das aus dem Stand der Technik bekannte und in den für die Datenübertragung der Nutzdaten verwendeten Paketdateneinheiten verwendete Informationselement "PDU type", das in der PDCP-SNPDU einen für die PDCP-SNPDU spezifischen, 3 Bit umfassenden Wert, zum Beispiel 001, enthält. Desweiteren enthält die PDCP-SNPDU ein Informationselement R, das 5 Bit umfaßt, und mit dem die Länge der PDCP-SNPDU auf einen durch 8 teilbaren Wert erweitert wird. Dieses Informationselement kann beliebige Werte annehmen, es kann insbesondere für weitere, für diese Erfindung irrelevante, Signalisierungen benutzt werden. Es ist nicht ausgeschlossen dieser PDCP-SNPDU noch weitere Informationselemente zuzufügen, erfindungsgemäß sind aber nur die Informationselemente PDU type, R und PDCP-Folgennummer in der PDCP-SNPDU von Bedeutung. Die Tabelle zeigt das vorgeschlagene PDCP-SNPDU-Format anhand eines Beispiels mit einer 8-bit PDCP-Folgennummer, einem 3-bit PDU type Informationselement und einem 5-bit Informationselement R:

**Tabelle:**

| PDCP-SNPDU | | | | | | | | |
|---|---|---|---|---|---|---|---|---|
| **Bit** | **8** | **7** | **6** | **5** | **4** | **3** | **2** | **1** |
| **Oct 1** | PDU type | | | R | | | | |
| **Oct 2** | PDCP-Folgennummer | | | | | | | |

Die PDCP-SNPDU gemäß der Tabelle umfaßt zwei Octette, die jeweils aus 8 Bits bestehen.

Das erfindungsgemäße Verfahren enthält nun die in Figur 5 dargestellten folgenden Schritte:

Da der Verbindungswechsel immer vom Netzwerk, insbesondere von der höchsten Netzwerkeinheit 60 aus gestartet wird, beginnt immer das Netzwerk mit dem ersten Schritt. Der normale Datenaustausch von Paketdateneinheiten zwischen der Mobilstation 10 und der ersten übergeordneten Netzwerkeinheit 50 ist vor einem dritten Verbindungswechsel 700 in Figur 5 durch das Bezugszeichen 701 gekennzeichnet.

Im folgenden wird der Ablauf nach dem dritten Verbindungswechsel 700 beschrieben.

### Schritt 1:

Die PDCP-Protokolleinheit 2100 in der ersten übergeordneten Netzwerkeinheit 50 stoppt die Datenübertragung über die bisher verwendeten Übertragungskanäle zur Mobilstation 10.

### Schritt 2:

Die PDCP-Protokolleinheit 2100 in der ersten übergeordneten Netzwerkeinheit 50 überträgt die in der Veröffentlichung "Packet Data Convergence (PDCP) Protokoll" genannten übertragungsspezifischen Informationen 730 zur PDCP-Protokolleinheit 3100 der zweiten übergeordneten Netzwerkeinheit 55. Dazu gehören die PDCP-Uplink-Empfangsfolgennummer der als nächstes in der ersten übergeordneten Netzwerkeinheit 50 erwarteten Paketdateneinheit und der Speicherinhalt mit den PDCP-Downlink-Sendefolgennummern der zum Senden an die Mobilstation 10 gespeicherten Paketdateneinheiten.

### Schritt 3:

Die PDCP-Protokolleinheit 3100 der zweiten übergeordneten Netzwerkeinheit 55 sendet die PDCP-Uplink-Empfangsfolgennummer der nächsten erwarteten Paketdateneinheit über die RLC-Protokolleinheit 3200 der zweiten übergeordneten Netzwerkeinheit 55 gemäß dem Übertragungsschritt 740 und die RLC-Protokolleinheit 1200 der Mobilstation 10 gemäß dem Übertragungsschritt 741 an die PDCP-Protokolleinheit 1100 der Mobilstation 10 gemäß dem Übertragungsschritt 742, indem sie eine PDCP-SNPDU beispielsweise gemäß der Tabelle erzeugt, das dortige Informationselement entsprechend der zu sendenden PDCP-Uplink-Empfangsfolgennummer setzt und die PDCP-SNPDU an die gleiche RLC-Protokolleinheit 3200 der zweiten übergeordneten Netzwerkeinheit 55 und damit an den gleichen logischen Kanal, nämlich die zweite logische RLC-Verbindung 103 zur fehlerfreien Übertragung in der richtigen Reihenfolge im Übertragungsschritt 741 über die zweite Luftschnittstelle 91 übergibt, wobei die zweite logische RLC-Verbindung 103 auch für die Datenübertragung der übrigen, Nutzdaten enthaltenden Paketdateneinheiten genutzt wird.

Die PDCP-Protokolleinheit 3100 in der zweiten übergeordneten Netzwerkeinheit 55 ignoriert zunächst alle von der Mobilstation 10 empfangenen Paketdateneinheiten, die keine PDCP-SNPDUs sind.

### Schritt 4:

Die PDCP-Protokolleinheit 1100 der Mobilstation 10 stoppt, nachdem es die PDCP-SNPDU von der zweiten übergeordneten Netzwerkeinheit 55 nach dem Übertragungsschritt 742 empfangen hat, zunächst den Nutzdatentransfer zur zweiten übergeordneten Netzwerkeinheit 55.

Die PDCP-Protokolleinheit 1100 der Mobilstation 10 nimmt nun für den Fall, daß bei ihrer Einrichtung einen Verbindungswechsel betreffende ausgehandelte Veränderungen 720, wie z.B. ein Zurücksetzen der internen Protokoll-Informationen, vereinbart wurden, diese Veränderungen 720 vor.

Anschließend sendet die PDCP-Protokolleinheit 1100 der Mobilstation 10 die PDCP-Downlink-Empfangsfolgennummer der nächsten von ihr erwarteten Paketdateneinheit an die PDCP-Protokolleinheit 3100 der zweiten übergeordneten Netzwerkeinheit 55, indem es eine PDCP-SNPDU gemäß der Tabelle erzeugt, das Informationselement entsprechend der PDCP-Downlink-Empfangsfolgennummer setzt, und die PDCP-SNPDU gemäß dem Übertragungsschritt 745 an die gleiche RLC-Protokolleinheit 1200 der Mobilstation 10 und damit an die gleiche zweite logische RLC-Verbindung 103 zur fehlerfreien Übertragung in der richtigen Reihenfolge über die zweite Luftschnittstelle 91 übergibt, die auch für die Datenübertragung der Nutzdaten transportierenden Paketdateneinheiten genutzt wird. Die RLC-Protokolleinheit 1200 der Mobilstation 10 überträgt auf diese Weise die PDCP-SNPDU an die RLC-Protokolleinheit 3200 der zweiten übergeordneten Netzwerkeinheit 55 gemäß dem Übertragungsschritt 746. Die RLC-Protokolleinheit 3200 der zweiten übergeordneten Netzwerkeinheit 55 überträgt dann die PDCP-SNPDU an die PDCP-Protokolleinheit 3100 der zweiten übergeordneten Netzwerkeinheit 55 gemäß dem Übertragungsschritt 747.

Die PDCP-Protokolleinheit 1100 der Mobilstation 10 nimmt außerdem den Nutzdatentransfer zur zweiten übergeordneten Netzwerkeinheit 55 wieder auf, wobei dieser Nutzdatentransfer mit der Paketdateneinheit begonnen und dann entsprechend fortgesetzt wird, die durch die empfangene PDCP-Uplink-Empfangsfolgennummer referenziert wurde und die durch eine entsprechende von der PDCP-Protokolleinheit 1100 der Mobilstation 10 vergebene PDCP-Uplink-Sendefolgennummer identifiziert werden kann. Die beispielhaft gezeigte Übertragung der ersten Paketdateneinheit nach den Veränderungen 720 in der PDCP-Protokolleinheit 1100 der Mobilstation 10 erfolgt dabei gemäß dem Übertragungsschritt 750 zunächst von der PDCP-Protokolleinheit 1100 der Mobilstation 10 zur RLC-Protokolleinheit 1200 der Mobilstation 10 und von dort gemäß dem Übertragungsschritt 755 zur RLC-Protokolleinheit 3200 der zweiten übergeordneten Netzwerkeinheit 55 und von dort gemäß dem Übertragungsschritt 758 zur PDCP-Protokolleinheit 3100 der zweiten übergeordneten Netzwerkeinheit 55.

### Schritt 5:

Die PDCP-Protokolleinheit 3100 der zweiten übergeordneten Netzwerkeinheit 55 nimmt, nachdem sie die PDCP-SNPDU von der Mobilstation 10 nach dem Übertragungsschritt 747 empfangen hat, den Nutzdatentransfer wieder auf, wobei dieser Nutzdatentransfer mit der Paketdateneinheit begonnen und dann entsprechend fortgesetzt wird, die durch die empfangene PDCP-Downlink-Empfangsfolgennummer referenziert wurde und die durch eine entsprechende in der PDCP-Protokolleinheit 3100 der zweiten übergeordneten Netzwerkeinheit 55 vergebene PDCP-Downlink-Sendefolgennummer identifiziert werden kann.

Die PDCP-Protokolleinheit 3100 der zweiten übergeordneten Netzwerkeinheit 55 sendet dann die erste Paketdateneinheit dieses Nutzdatentransfers über die RLC-Protokolleinheit 3200 der zweiten übergeordneten Netzwerkeinheit 55 gemäß dem Übertragungsschritt 760 und die RLC-Protokolleinheit 1200 der Mobilstation 10 gemäß dem Übertragungsschritt 765 an die PDCP-Protokolleinheit 1100 der Mobilstation 10 gemäß dem Übertragungsschritt 768, indem sie die Paketdateneinheit an die gleiche RLC-Protokolleinheit 3200 der zweiten übergeordneten Netzwerkeinheit 55 und damit an den gleichen logischen Kanal, nämlich die zweite logische RLC-Verbindung 103 zur fehlerfreien Übertragung in der richtigen Reihenfolge im Übertragungsschritt 741 über die zweite Luftschnittstelle 91 übergibt. Die weiteren Paketdateneinheiten des Nutzdatentransfers werden in entsprechender Weise zwischen der Mobilstation 10 und der zweiten übergeordneten Netzwerkeinheit 55 übertragen.

In Figur 5 sind die Schritte 1 - 5 beispielhaft dargestellt. Eine erste Nachricht 705 von einer RRC-Protokolleinheit 2000 der ersten übergeordneten Netzwerkeinheit 50 an die PDCP-Protokolleinheit 2100 der ersten übergeordneten Netzwerkeinheit 50 dient beispielhaft der Initiierung des dritten Verbindungswechsels 700 und damit der Veranlassung der Übertragung der übertragungsspezifischen Informationen 730 zur PDCP-Protokolleinheit 3100 der zweiten übergeordneten Netzwerkeinheit 55. Eine zweite Nachricht 708 von einer RRC-Protokolleinheit 3000 der zweiten übergeordneten Netzwerkeinheit 55 an die PDCP-Protokolleinheit 3100 der zweiten übergeordneten Netzwerkeinheit 55 dient ebenfalls beispielhaft der Initiierung des dritten Verbindungswechsels 700 und damit der Veranlassung der einer Initialisierung 710 der PDCP-Protokolleinheit 3100 der zweiten übergeordneten Netzwerkeinheit 55, nach der dann die übertragungsspezifischen Informationen 730 empfangen werden können.

Es ist mit der beschriebenen Erfindung möglich, den nötigen Austausch von Informationen über die nächste erwartete Paketdateneinheit in Form der entsprechenden Folgennummern effizient über die bestehenden Datenkanäle ohne zusätzliche Signalisierung und ohne den Auf- und Abbau von neuen Datenkanälen oder die Rekonfiguration bestehender Datenkanäle durchzuführen.

Das vorgeschlagene Datenformat für die hierfür von der entsprechenden PDCP-Protokolleinheit 1100, 3100 erzeugte PDCP-SNPDU ist sehr Bandbreiten-effizient, da nur wenige ungenutzte Informationen übertragen werden müssen, nämlich 5 Bit, und darüber hinaus keine weiteren als die benötigten Informationen, nämlich 8 Bit für die entsprechende Folgenummer und 3 Bit für den entsprechenden PDU Typen in der PDCP-SNPDU vorhanden sind.

Mit der Übertragung der PDCP-Empfangsfolgennummer durch die entsprechende PDCP-Protokolleinheit 1100, 3100 selbst, liegen die Folgenummern nach der jeweiligen Übertragung in dem Protokoll vor, in dem sie auch ausgewertet werden. Diese Erfindung führt also auch nicht zu einem internen Datentransfer von einem Protokoll, wie z.B. dem RRC-Protokoll, zu einem anderen.

Durch das Ignorieren empfangener Paketdateneinheiten des Nutzdatentransfers durch die PDCP-Protokolleinheit 3100 der zweiten übergeordneten Netzwerkeinheit 55 vom Zeitpunkt des dritten Verbindungswechsels 700 bis zum Zeitpunkt des Empfangs der PDCP-SNPDU in der zweiten übergeordneten Netzwerkeinheit 55 mittels dem Übertragungsschritt 747 ist sichergestellt, daß keine "alten" Paketdateneinheiten, die noch vor dem dritten Verbindungswechsel 700 von der PDCP-Protokolleinheit 1100 der Mobilstation 10 behandelt, aber erst nach dem dritten Verbindungswechsel 700 von der PDCP-Protokolleinheit 3100 der zweiten übergeordneten Netzwerkeinheit 55 empfangen wurden, zu Fehlern in der PDCP-Protokolleinheit 3100 der zweiten übergeordneten Netzwerkeinheit 55 führen.

Dies wurde dadurch erreicht, daß dieselben RLC-Protokolleinheiten 1200, 3200 und damit dieselbe zweite logische RLC-Verbindung 103 sowohl für die Übertragung der Paketdateneinheiten für den Nutzdatentransfer als auch für die Übertragung der PDCP-SNPDUs verwendet werden. Da die RLC-Protokolleinheiten für eine Übertragung in der richtigen Reihenfolge der Daten sorgt, ist nach dem Empfang der PDCP-SNPDU sichergestellt, daß keine "alten" Paketdateneinheiten mehr übertragen und an höhere Protokollschichten gegeben werden können.

Durch das Zurücksetzen der PDCP-Protokolleinheit 1100 der Mobilstation 10 erst nach Empfang der PDCP-SNPDU von der zweiten übergeordneten Netzwerkeinheit 55 beim Übertragungsschritt 742 aber vor dem Versenden der PDCP-SNPDU an die zweite übergeordnete Netzwerkeinheit 55 durch den Übertragungsschritt 745 ist sichergestellt, daß alle "alten" Paketdateneinheiten, die noch von der ersten übergeordneten Netzwerkeinheit 50 gesendet wurden, mit der alten, nicht zurückgesetzten PDCP-Protokolleinheit 1100 der Mobilstation 10 dekomprimiert werden, und alle neuen Paketdateneinheiten, die von der zweiten übergeordneten Netzwerkeinheit 55 gesendet wurden, mit der zurückgesetzten PDCP-Protokolleinheit 1100 der Mobilstation 10 dekomprimiert werden.

## Patentansprüche

1. Verfahren zum Betreiben eines Mobilfunknetzes (1), in dem Nutzdaten zwischen einer Mobilstation (10) und einer ersten Basisstation (25) übertragen werden, wobei die Nutzdaten vor ihrer Übertragung zu Paketdateneinheiten, zusammengesetzt werden, wobei für die Übertragung der Paketdateneinheiten sowohl in der Mobilstation (10) als auch in einer der ersten Basisstation (25) übergeordneten ersten Netzwerkeinheit (50) übertragungsspezifische Informationen, die einen aktuellen Zustand der Übertragung beschreiben, abgelegt werden, und wobei bei einem Verbindungswechsel der Mobilstation (10) von der ersten Basisstation (25) zu einer zweiten Basisstation (30) mit einer zweiten übergeordneten Netzwerkeinheit (55) die in der ersten übergeordneten Netzwerkeinheit (50) abgelegten übertragungsspezifischen Informationen an die zweite übergeordnete Netzwerkeinheit (55) übertragen werden, um die Übertragung nach dem Verbindungswechsel im wesentlichen direkt von ihrem aktuellen Zustand aus fortzusetzen, **dadurch gekennzeichnet, daß** vor dem Verbindungswechsel die Übertragung der Paketdateneinheiten von der ersten Basisstation (25) zur Mobilstation (10) von der ersten übergeordneten Netzwerkeinheit (50) angehalten wird, daß mit den übertragungsspezifischen Informationen von der ersten übergeordneten Netzwerkeinheit (50) ein erster Identifikator der als nächstes von der Mobilstation (10) in der ersten übergeordneten Netzwerkeinheit (50) erwarteten Paketdateneinheit an die zweite übergeordnete Netzwerkeinheit (55) übertragen wird und daß von der zweiten übergeordneten Netzwerkeinheit (55) eine erste Verbindungswechselpaketdateneinheit an die Mobilstation (10) übertragen wird, die den ersten Identifikator umfaßt.

2. Verfahren nach Anspruch 1, **dadurch gekennzeichnet, daß** von der Mobilstation (10) die Versendung von Paketdateneinheiten nach Empfang des ersten Identifikators angehalten wird.

3. Verfahren nach Anspruch 1 oder 2, **dadurch gekennzeichnet, daß** von der Mobilstation (10) nach Empfang des ersten Identifikators eine zweite Verbindungswechselpaketdateneinheit an die zweite übergeordnete Netzwerkeinheit (55) übertragen wird, die einen zweiten Identifikator der als nächstes von der zweiten übergeordneten Netzwerkeinheit (55) in der Mobilstation (10) erwarteten Paketdateneinheit umfaßt.

4. Verfahren nach Anspruch 3, **dadurch gekennzeichnet, daß** die zweite Verbindungswechselpaketdateneinheit von der Mobilstation (10) nach Rekonfiguration oder Zurücksetzen der Mobilstation (10) an die zweite übergeordnete Netzwerkeinheit (55) übertragen wird.

5. Verfahren nach Anspruch 3 oder 4, **dadurch gekennzeichnet, daß** das Versenden von Paketdateneinheiten von der zweiten übergeordneten Netzwerkeinheit (55) an die Mobilstation (10) nach Empfang des zweiten Indikators mit der durch den zweiten Indikator referenzierten Paketdateneinheit fortgesetzt wird.

6. Verfahren nach Anspruch 3, 4 oder 5, **dadurch gekennzeichnet, daß** von der zweiten übergeordneten Netzwerkeinheit (55) Paketdateneinheiten ignoriert werden, die nach dem Verbindungswechsel und vor dem Empfang der zweiten Verbindungswechselpaketdateneinheit von der Mobilstation (10) empfangen werden.

7. Verfahren nach einem der Ansprüche 2 bis 6, **dadurch gekennzeichnet, daß** das Versenden von Paketdateneinheiten von der Mobilstation (10) nach Empfang des ersten Indikators mit der durch den ersten Indikator referenzierten Paketdateneinheit fortgesetzt wird, wobei diese und die folgenden Paketdateneinheiten an die zweite übergeordnete Netzwerkeinheit (55) übertragen werden.

8. Verfahren nach Anspruch 7, **dadurch gekennzeichnet, daß** das Versenden von Paketdateneinheiten von der Mobilstation (10) nach Rekonfiguration oder Zurücksetzen der Mobilstation (10) mit der durch den ersten Indikator referenzierten Paketdateneinheit fortgesetzt wird, wobei diese und die folgenden Paketdateneinheiten an die zweite übergeordnete Netzwerkeinheit (55) übertragen werden.

9. Verfahren nach einem der vorherigen Ansprüche, **dadurch gekennzeichnet, daß** die zweite übergeordnete Netzwerkeinheit (55) vor Empfang der übertragungsspezifischen Informationen initialisiert wird.

10. Verfahren nach einem der vorherigen Ansprüche, **dadurch gekennzeichnet, daß** der erste Identifikator in der ersten Verbindungswechselpaketdateneinheit und/oder der zweite Identifikator in der zweiten Verbindungswechselpaketdateneinheit jeweils als Folgenummer der als nächsten erwarteten Paketdateneinheit übertragen wird.

11. Verfahren nach Anspruch 10, **dadurch gekennzeichnet, daß** die Folgenummer in einem vorgegebenen Format, insbesondere als 8-Bit Wert übertragen wird.

12. Verfahren nach Anspruch 10 oder 11, **dadurch gekennzeichnet, daß** die Folgenummer in einer Verbindungswechselpaketdateneinheit zusammen mit einem Informationselement, das die Verbindungswechselpaketdateneinheit als solche kennzeichnet, übertragen wird.

## Claims

1. Method for operation of a mobile radio network (1), in which payload data is transmitted between a mobile station (10) and a first base station (25), with the payload data being assembled before its transmission to form packet data units, with transmission-specific information which describes a current state of the transmission being stored for the transmission of the packet data units both in the mobile station (10) and in a first network unit (50), which is at a higher level than the first base station (25), and with transmission-specific information which is stored in the first higher-level network unit (50) being transmitted to the second higher-level network unit (55) in the event of a connection change of the mobile station (10) from the first base station (25) to a second base station (30), in order to continue the transmission essentially directly from its current state after the connection change, **characterized in that**, before the connection change, the transmission of the packet data units from the first base station (25) to the mobile station (10) is stopped by the first higher-level network unit (50), **in that** a first identifier for that packet data unit which is expected to be the next from the mobile station (10) in the first higher-level network unit (50) is transmitted to the second higher-level network unit (55) with the transmission-specific information from the first higher-level network unit (50), and **in that** a first connection change packet data unit is transmitted from the second higher-level network unit (55) to the mobile station (10) and includes the first identifier.

2. Method according to Claim 1, **characterized in that** the mobile station (10) stops the transmission of packet data units after reception of the first identifier.

3. Method according to Claim 1 or 2, **characterized in that** the mobile station (10) transmits a second connection change packet data unit to the second higher-level network unit (55) after reception of the first identifier, including a second identifier for the packet data unit which is expected to be the next from the second higher-level network unit (55) in the mobile station (10).

4. Method according to Claim 3, **characterized in that** the second connection change packet data unit is transmitted by the mobile station (10) to the second higher-level network unit (55), after reconfiguration or resetting of the mobile station (10).

5. Method according to Claim 3 or 4, **characterized in that** the transmission of packet data units from the second higher-level network unit (55) to the mobile station (10) is continued after reception of the second indicator with the packet data unit referenced by the second indicator.

6. Method according to Claim 3, 4 or 5, **characterized in that** the second higher-level network unit (55) ignores packet data units which are received after the connection change and before the mobile station (10) receives the second connection change packet data unit.

7. Method according to one of Claims 2 to 6, **characterized in that** the transmission of packet data units from the mobile station (10) is continued after reception of the first indicator with the packet data unit referenced by the first indicator, with this and the subsequent packet data units being transmitted to the second higher-level network unit (55).

8. Method according to Claim 7, **characterized in that** the transmission of packet data units from the mobile station (10) is continued with the packet data unit referenced by the first indicator, after reconfiguration or resetting of the mobile station (10), with this and the subsequent packet data units being transmitted to the second higher-level network unit (55).

9. Method according to one of the preceding claims, **characterized in that** the second higher-level network unit (55) is initialized before the reception of the transmission-specific information.

10. Method according to one of the preceding claims, **characterized in that** the first identifier in the first connection change packet data unit and/or the second identifier in the second connection change packet data unit are each transmitted as a serial number for the packet data unit which is the next to be expected.

11. Method according to Claim 10, **characterized in that** the serial number is transmitted in a predetermined format, in particular as an 8-bit value.

12. Method according to Claim 10 or 11, **characterized in that** the serial number is transmitted in a connection change packet data unit together with an information element which identifies the connection change packet data unit as such.

## Revendications

1. Procédé de gestion d'un réseau de téléphonie mobile selon lequel on transmet entre une station mobile (10) et une première station de base (25), des données utiles composées en unités de paquets de données avant leur transmission, selon lequel
des informations spécifiques à la transmission, qui décrivent l'état actuel de la transmission, sont enregistrées à la fois dans la station mobile (10) et aussi dans une première unité de réseau (50) subordonnée à la première station de base (25) pour la transmission des unités de paquets de données, et
lors d'un changement de liaison de la station mobile (10) passant de la première station de base (25) à une seconde station de base (30) ayant une seconde unité de réseau (55) subordonnée, les informations spécifiques à la transmission contenues dans la première unité de réseau subordonnée (50) sont transmises à la seconde unité de réseau subordonnée (55) pour poursuivre la transmission après le changement de liaison, essentiellement directement à partir de son état actuel,
**caractérisé en ce qu'**
avant le changement de liaison, la première unité de réseau (50) subordonnée retient la transmission des unités de paquets de données de la première station de base (25) vers la station mobile (10),
la première unité de réseau subordonnée (50) transmet avec les informations spécifiques à la transmission, un premier identificateur de l'unité de paquets de données attendu comme paquet suivant est transmis par la station mobile (10) de la première unité de réseau subordonnée (50) à la seconde unité de réseau subordonnée (55), et
la seconde unité de réseau subordonnée (55) transmet une première unité de paquets de données de changement de liaison à la station mobile (10), cette unité contenant le premier identificateur.

2. Procédé selon la revendication 1,
**caractérisé en ce que**
la station mobile (10) retient l'envoi des unités de paquets de données après la réception du premier identificateur.

3. Procédé selon la revendication 1 ou 2,
**caractérisé en ce qu'**
après la réception du premier identificateur la station mobile (10) transmet une seconde unité de paquets de données de changement de liaison à la seconde unité de réseau (55) subordonnée, qui contient un second identificateur correspondant à l'unité de paquets de données suivant, et attendu par la seconde unité de réseau subordonnée (55) à la station mobile (10).

4. Procédé selon la revendication 3,
**caractérisé en ce que**
la seconde unité de paquets de données de changement de liaison est transmise par la station mobile (10) après reconfiguration ou remise à l'état de la station mobile (10) à la seconde unité de réseau subordonnée (55).

5. Procédé selon la revendication 3 ou 4,
**caractérisé en ce que**
l'envoi d'unités de paquets de données par la seconde unité de réseau subordonnée (55) à la station mobile (10) après réception du second indicateur se poursuit par l'unité de paquets de données référencée par le second indicateur.

6. Procédé selon les revendications 3, 4 ou 5,
**caractérisé en ce que**
la seconde unité de réseau subordonnée (55) ignore les unités de paquets de données reçus après le changement de liaison et avant la réception de la seconde unité de paquets de données de changement de liaison par la station mobile (10).

7. Procédé selon l'une des revendications 2 à 6,
**caractérisé en ce qu'**
après la réception du premier indicateur, l'émission des unités de paquets de données par la station mobile (10) se poursuit par l'unité de paquets de données référencée par le premier indicateur,
cette unité et les unités de paquets de données suivantes étant transmises à la seconde unité de réseau subordonnée (55).

8. Procédé selon l'une des revendications 7,
**caractérisé en ce qu'**
après reconfiguration ou remise à l'état de la station mobile (10) on poursuit l'envoi des unités de paquets de données par la station mobile (10), avec l'unité de paquets de données référencée par le premier indicateur,
cette unité et les unités de paquets de données suivantes étant transmises à la seconde unité de réseau subordonnée (55).

9. Procédé selon l'une des revendications précédentes,
**caractérisé en ce que**
la seconde unité de réseau subordonnée (55) est initialisée avant la réception des informations spécifiques à la transmission.

10. Procédé selon l'une des revendications précédentes,
**caractérisé en ce que**
le premier identificateur est transmis dans la première unité de paquets de données de changement de liaison et/ou le second identificateur est transmis dans la seconde unité de paquets de données de changement de liaison, chaque fois comme numéro de succession de l'unité de paquets de données suivante attendue.

11. Procédé selon la revendication 10,
**caractérisé en ce que**
le numéro de suite est transmis dans un format prédéterminé notamment sous la forme d'une valeur à 8 bits.

12. Procédé selon la revendication 10 ou 11,
**caractérisé en ce que**
le numéro de suite est transmis dans une unité de paquets de données de changement de liaison avec un élément d'information caractérisant en tant que telle l'unité de paquets de données de changement de liaison.
